# FASCICULE DE BREVET EUROPEEN

(11) **EP 0 808 062 B1**
(45) Date de publication et mention de la délivrance du brevet: **23.10.2002**
(21) Numéro de dépôt: 97401025.8
(22) Date de dépôt: 07.05.1997
(51) Int. Cl.: H04N 7/035, H04N 5/10

(54) **Procédé et dispositif de correction d'erreur de synchronisation**
Verfahren und Vorrichtung zur Synchronisierungsfehlerkorrektion
Method and device for correcting synchronisation errors

(30) Priorité: 14.05.1996 FR 9605961
(43) Date de publication de la demande: 19.11.1997
(73) Titulaire: THOMSON multimedia, 92648 Boulogne Cédex (FR)
(72) Inventeur: Stumpf, Christof, 92648 Boulogne Cedex (FR); Tournier, Christian, 92648 Boulogne Cedex (FR)
(74) Mandataire: Ruellan-Lemonnier, Brigitte

(56) Documents cités:
- EP-A- 0 462 752
- EP-A- 0 533 194
- WO-A-95/34987
- FR-A- 2 556 903
- GB-A- 2 151 422
- US-A- 5 034 815

## Description

La présente invention concerne la visualisation, sur un écran de télévision par exemple, d'informations auxiliaires telles que des données de type TELETEXTE, VPS (Vidéo Programming System en langue anglaise) ou WSS (Wide Screen Signaling en langue anglaise), transmises sur des lignes prédéfinies du VBI (Vertical Blanking Interval en langue anglaise).

L'invention concerne particulièrement un procédé et un dispositif de correction d'erreurs de synchronisation des opérations de récupération des séquences de données auxiliaires transmises sur les lignes invisibles du VBI d'un signal vidéo comportant un signal de synchronisation verticale Vsync et un signal de synchronisation horizontale Hsync. Lesdits signaux Hsync et Vsync sont utilisés pour synchroniser l'ouverture de fenêtres temporelles de récupérations desdites données.

Le signal Vsync comporte une succession périodique de créneaux v ayant chacun une durée égale à la durée d'une trame vidéo tandis que le signal Hsync comporte une succession périodique d'impulsions h de durée 4 µs approximativement.

Il est bien connu dans le domaine des transmissions de programmes de télévision d'utiliser des lignes prédéfinies du VBI pour transmettre des données représentant soit des données du type TELETEXT ( informations de toutes sortes telles que la météo ou les nouvelles, ou encore des informations relatives à la bourse), ou du type VPS permettant de programmer le début d'enregistrement d'un programme sur un magnétoscope ou l'instant de changement automatique de chaîne, ou encore du type Closed caption (sous-titre accompagnant des programmes à l'attention des malentendants).

Les circuits utilisés pour extraire ces informations à partir du signal vidéo doivent être capables de détecter avec précision les lignes du VBI contenant les données auxiliaires ainsi que l'instant d'occurrence desdites données sur chaque ligne du VBI détectée. Une solution connue dans l'art antérieur consiste à utiliser un compteur de lignes qui est remis à zéro au début de chaque trame vidéo et dont le comptage est synchronisé avec le début de chaque ligne vidéo. Un décodeur approprié est utilisé pour générer des fenêtres temporelles de récupération des données auxiliaires. Généralement, l'instant d'ouverture d'une fenêtre est retardé par rapport au début d'une ligne vidéo de manière éviter que des signaux sinusoïdaux présents sur chaque ligne telles que par exemple des signaux de synchroniseur couleur (color burst en langue anglaise) soient récupérées.

La récupération des données auxiliaires nécessite donc un signal de synchronisation verticale permettant de déterminer la ligne du VBI à explorer et un signal de synchronisation horizontale permettant d'ouvrir, à l'instant approprié prédéterminé, les fenêtres temporelles de récupération des données auxiliaires présentes sur la ligne explorée. De manière connue en soi, lesdits signaux de synchronisation sont généralement obtenus à partir du signal de synchronisation de ligne et du signal de synchronisation de trame transmis avec le signal vidéo. L'obtention du signal de synchronisation verticale Vsync est réalisée, aisément par une technique d'intégration numérique connue, tandis que le signal de synchronisation horizontale Hsync est obtenu, de manière également connue, au moyen de détecteur de seuil par exemple et, de ce fait sa qualité est étroitement liée à la qualité du signal vidéo transmis. En effet, si le signal vidéo transmis est de qualité médiocre, les signaux de synchronisation peuvent subir des détériorations qui rendent leur détection aléatoire. Ceci peut provoquer des erreurs de synchronisation des séquences de récupération des données auxiliaires. Ces erreurs peuvent consister soit en une absence d'impulsion de synchronisation horizontale, soit en une présence d'une ou de plusieurs impulsions additionnelles erronées.

Le but de l'invention est de détecter les erreurs de synchronisation susceptibles de provoquer la perte des informations auxiliaires et de corriger rapidement et automatiquement lesdites erreurs. L'invention protégée est définie dans les revendications 1 à 12 annexées.

Selon le procédé de l'invention, en cas d'absence d'une impulsion de synchronisation horizontale au bout d'une durée égale à H+ΔH, où H est la période du signal Hsync et ΔH est un premier laps de temps prédéterminé, on génère une impulsion ha de synchronisation artificielle.

Ainsi, l'opération de récupération des données auxiliaires est moins sensible à d'éventuelle perturbations susceptibles de détériorer la qualité du signal transmis.

Selon une première caractéristique du procédé de l'invention, dès la détection d'une impulsion de synchronisation horizontale h, on génère un signal de masquage de tout signal susceptible d'être détecté pendant une durée M égale H-ΔH1, où ΔH1 est un deuxième laps de temps prédéterminé.

Ainsi, les effets des impulsions additionnelles susceptibles provoquer une erreur de synchronisation sont systématiquement inhibés.

Selon une caractéristique essentielle du procédé de l'invention, en cas de synchronisation artificielle on décale dans le temps l'instant d'ouverture de la fenêtre de récupération des données auxiliaires de manière à faire coïncider ledit instant avec le début de la séquence de données auxiliaires à récupérer.

Ce décalage consiste à ouvrir les fenêtres temporelles au bout d'une durée inférieure d'au moins trois fois le laps de temps ΔH µs. Bien entendu, cette durée peut être choisie de manière programmée en fonction du retard de synchronisation introduit par l'absence d'une impulsion h.

Le procédé selon l'invention est mis en oeuvre au moyen d'un dispositif comportant un détecteur de seuil qui reçoit un signal CVBS (Composite video Baseband Signal en langue anglaise) et délivre un signal composite de synchronisation Csync à une unité numérique de calcul destinée à extraire les signaux de synchronisation verticale Vsync et horizontale HSYNC dudit signal composite Csync.

Selon l'invention, l'unité numérique de calcul comporte, en outre, un moyen de multiplexage destiné à sélectionner, parmi au moins deux instant différents, un instant d'ouverture d'une fenêtre temporelle de récupération des données auxiliaires contenues dans une ligne explorée.

D'autres caractéristiques et avantages de l'invention ressortiront de la description qui va suivre, prise à titre d'exemple non limitatif, en référence aux figures annexées dans lesquelles:
- La figure 1 et la figure 2 représentent des chronogrammes illustrant l'extraction d'un signal de synchronisation horizontale Hsync à partir d'un signal composite Csync selon l'invention.
- La figure 3 représente un chronogramme illustrant partiellement l'extraction d'un signal de synchronisation verticale Vsync à partir du signal composite Csync selon l'invention.

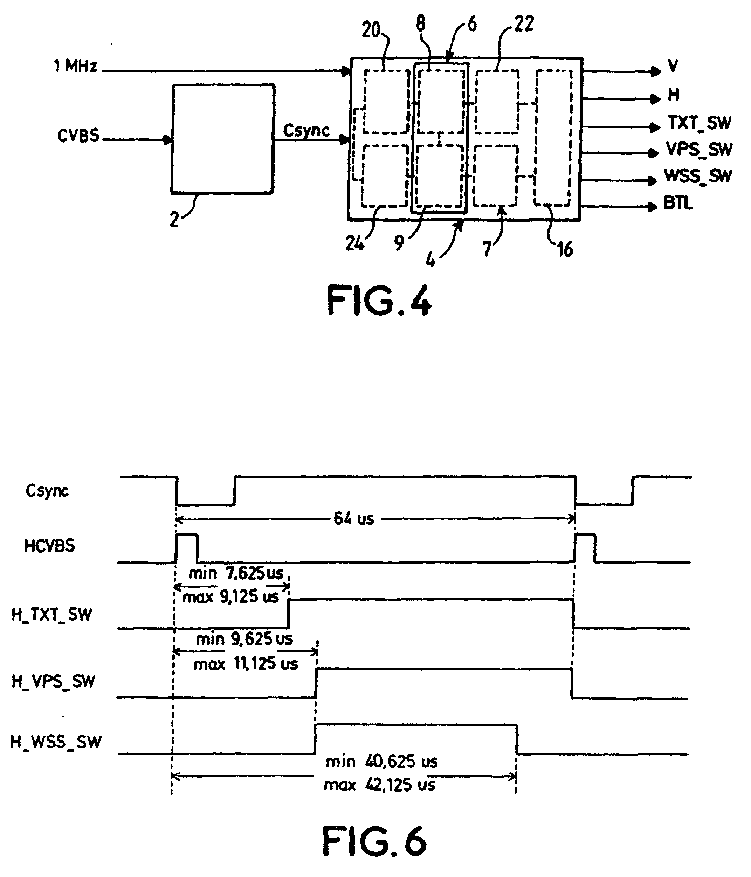

- La figure 4 représente schéma bloc d'un dispositif de récupération de données auxiliaires selon l'invention.
- La figure 5 représente schématiquement un mode de réalisation préféré du dispositif de la figure 4.
- La figure 6 représente des exemples de fenêtres temporelles de récupération de données auxiliaires obtenues par le procédé selon l'invention.

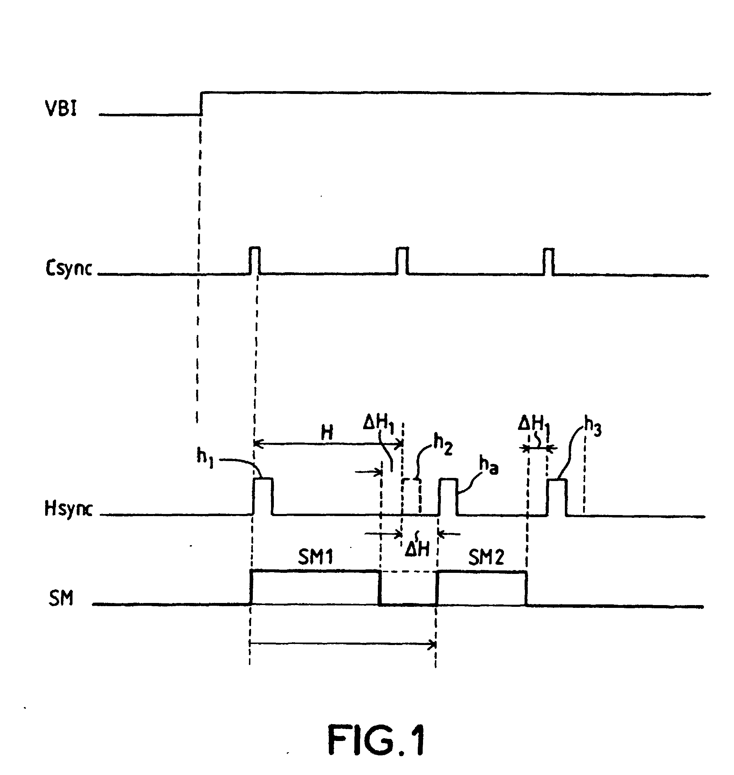

Sur la figure 1 est représenté un chronogramme illustrant partiellement une première étape d'un procédé de correction des erreurs de synchronisation des opérations de récupération de données auxiliaires transmises sur des lignes invisibles du VBI d'un signal vidéo transportant une image destinée à être affichée sur un écran. Ce signal vidéo comporte un signal Vsync constitué par une succession périodique de créneaux de synchronisation verticale v et un signal Hsync formé par une succession périodique d'impulsions de synchronisation horizontale h. Lesdits signaux Vsync et Hsync sont utilisés pour synchroniser des circuits réalisant l'ouverture de fenêtres temporelles de récupérations desdites données auxiliaires présentes sur une ligne explorée.

Comme on peut le voir sur la figure 1, le signal Hsync a une période H égale à la durée d'une ligne vidéo. L'impulsion h2, représentée en pointillée, illustre une impulsion non détectée. Dans ce cas, au bout d'une durée égale à H+ΔH, une impulsion ha de synchronisation artificielle est générée, où ΔH est un premier laps de temps prédéterminé. En outre, dès la détection d'une impulsion de synchronisation horizontale h, on génère un signal de masquage de tout signal susceptible d'être détecté pendant une durée M égale H-ΔH1, où ΔH1 est un deuxième laps de temps prédéterminé.

Selon un mode de réalisation préféré du procédé de l'invention, les laps de temps ΔH est égal à 4 µs et ΔH1 est égal à ΔH/2.

Selon une caractéristique essentielle du procédé de l'invention, en cas de génération d'une impulsion de synchronisation artificielle ha, on décale l'instant d'ouverture de la fenêtre de récupération des données auxiliaires de manière à faire coïncider ledit instant d'ouverture avec le début de la séquence de données auxiliaires à récupérer.

Notons que cette étape se produit dans le cas où une impulsion de synchronisation h est absente, comme cela est illustré par la figure 1, et dans le cas où ladite impulsion h est détectée avec un temps de retard.

Comme on peut le voir sur la figure 1, la génération des impulsions h est synchronisée sur le front descendant du signal composite Csync. Ainsi, dès l'apparition d'un flanc descendant du signal Csync, une impulsion h1 et un premier créneaux de masquage SM1 sont générés. En cas de génération d'une impulsion de synchronisation artificielle, on réduit la durée M du créneau SM1 de masquage de manière à éviter de masquer l'impulsion de synchronisation horizontale correcte h3 suivant l'impulsion de synchronisation horizontale manquante. Dans le cas illustré par la figure 1, où ladite impulsion suivante h2 n'est pas détectée, et où une impulsion artificielle ha est générée, un deuxième créneau de masquage SM2 est généré de façon synchrone avec le front montant de l'impulsion artificielle ha. La durée dudit créneaux SM2 est inférieure à celle du premier créneau SM1 de manière à ne pas masquer l'impulsion h3 suivante.

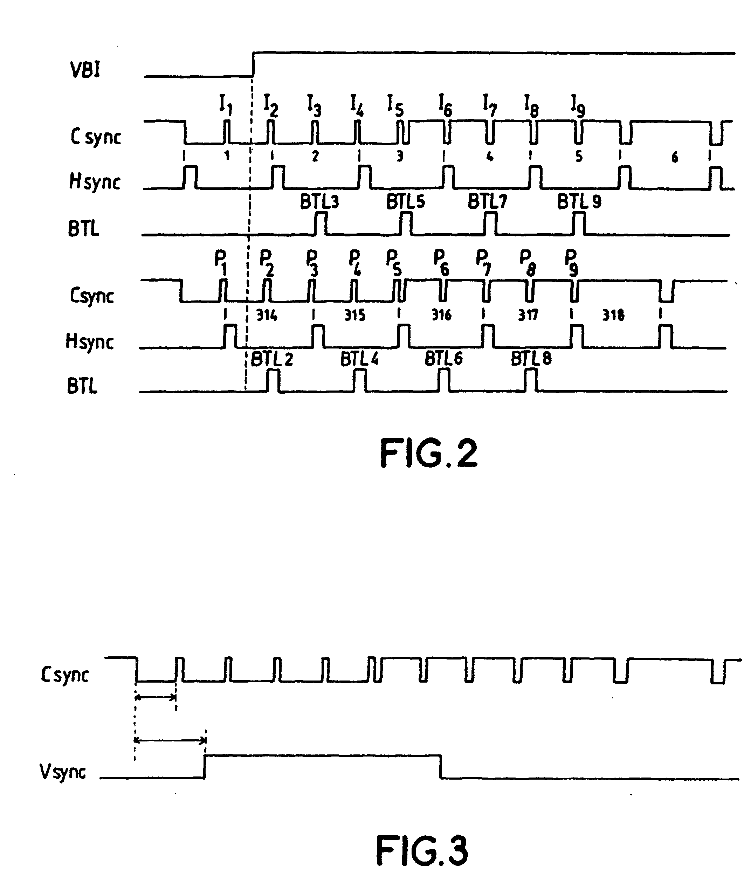

Dans une autre étape du procédé de l'invention, on définit un critère de qualité des lignes du VBI conformément auquel les données auxiliaires présentes sur une ligne donnée du VBI seront récupérées ou abandonnées. Selon ledit critère de qualité, en cas de détection de plus d'une impulsion h pendant la durée de masquage M, et en cas de non détection d'impulsion h pendant la durée H+ΔH, on génère une impulsion BTL d'indication d'une ligne erronée. Le nombre d'impulsions BTL est ensuite envoyé à une unité d'acquisition, non représentée, chargé de compter le nombre de lignes erronées détectées. Notons cependant qu'une impulsion BTL est générée à chaque détection d'une impulsion de synchronisation de demi-ligne, bien que la ligne explorée ne soit pas erronée comme cela est représenté à la figure 2. Le nombre d'impulsions BTL ainsi générées dépend du standard de télévision utilisé. L'exemple de la figure 2 correspond au standard PAL dans lequel le signal composite de synchronisation comporte neuf impulsions de synchronisation de demi-lignes I1, 12, I3, I4, I5, I6, I7, I8 et I9 pour la trame impaire, et neuf impulsions de synchronisation de demi-lignes P1, P2, P3, P4, P5, P6, P7, P8 et P9, pour la trame paire. En effet, les impulsions I3, I5, I7 et I9 sont générées pendant la période de masquage et produisent de ce fait respectivement les impulsions BTL3, BTL5, BTL7 et BTL9. De la même façon, les impulsions P2, P4, P6 et P8 sont générées également pendant la période de masquage et produisent respectivement les impulsions B2, B4, B6 et B8. L'apparition desdites impulsions BTL3, BTL5, BTL7 et BTL9 ainsi que des impulsions BTL2, BTL4, BTL6 et BTL8 ne correspond pas à la détection de lignes erronées au sens du critère de qualité établi dans le procédé de l'invention. Par conséquent le nombre desdites impulsions est déduit, par l'unité d'acquisition, du nombre total de lignes erronées qui lui est fourni.

Notons que la détection d'une demi-ligne pendant le VBI provoque la perte d'une impulsion hsync et par conséquent un décalage d'une ligne dans la trame courante. Dans ce cas, une resynchronisation correcte est retrouvée automatiquement au bout d'un nombre de ligne vidéo qui dépend du laps de temps ΔH. En choisissant ΔH égal à 4µs, la resynchronisation est obtenue au bout d'une durée de 8 lignes vidéo.

Le procédé selon l'invention est mis en oeuvre au moyen d'un dispositif comportant un détecteur de seuil 2 qui reçoit un signal CVBS et délivre un signal composite de synchronisation Csync à une unité numérique de calcul 4 destinée à extraire les signaux de synchronisation verticale Vsync et horizontale Hsync dudit signal composite Csync. Ledit dispositif comporte en outre un module 6 de détection des lignes du VBI comprenant des données auxiliaires. Selon une caractéristique essentielle du dispositif de l'invention, ladite unité numérique de calcul 4 comporte, en outre, un moyen de multiplexage 7 destiné à sélectionner, parmi au moins deux instants différents, un instant d'ouverture d'une fenêtre temporelle de récupération des données auxiliaires contenues dans une lignes explorée.

L'instant sélectionné est préalablement déterminé au moyen du module 6 de sélection de ligne. Ce dernier comporte un premier compteur 8 destiné à pointer la ligne du VBI à explorer, et un deuxième compteur 9 destiné à déterminer l'instant d'ouverture d'une fenêtre temporelle dans la ligne pointée. Ledit deuxième compteur 9 reçoit des impulsions d'horloge à une fréquence dépendant de la résolution désirée ou nécessaire et détermine, par comptage desdites impulsion d'horloge, une durée au bout de laquelle une fenêtre doit être ouverte. Cette fréquence peut être de 1 MHz par exemple. La durée au bout de laquelle une fenêtre doit être ouverte est déterminée à partir du début de la ligne du VBI explorée. A la fin de ladite ligne, le compteur 8 est incrémenté d'une ligne et le compteur 9 est remis à zéro.

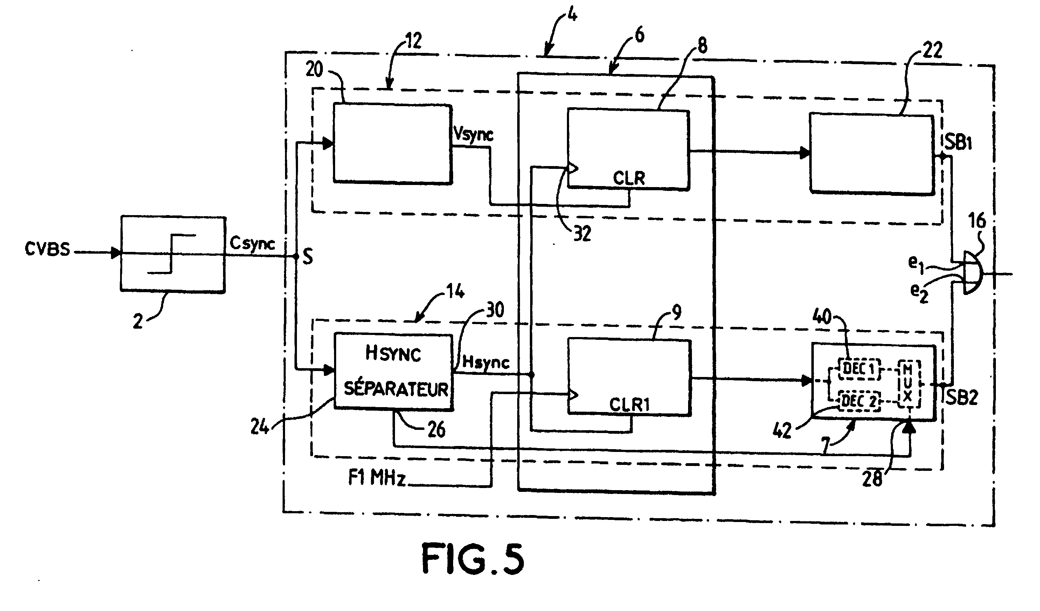

Comme on peut le voir sur la figure 5 représentant un mode de réalisation préféré du dispositif mettant en oeuvre le procédé de l'invention, l'unité numérique de calcul 4 comporte deux blocs fonctionnant parallèlement, soit un premier bloc 12 dédié à l'extraction du signal de synchronisation verticale Vsync et un deuxième bloc dédié à l'extraction du signal de synchronisation horizontale Hsync, lesdits premier et deuxième blocs sont reliés à une sortie S du détecteur de seuil 2, tandis que les sorties respectives desdits premier et deuxième blocs sont reliées respectivement à une première entrée e1 et à une deuxième entrée e2 d'une porte logique ET portant la référence 16.

Le premier bloc 12 comporte un intégrateur numérique 20 ayant une entrée reliée à la sortie S du détecteur de seuil 2 et une sortie reliée à une entrée CLR de remise à zéro du premier compteur 8. La sortie dudit premier compteur 8 est reliée, via un décodeur de lignes 22, à la première entrée e1 de la porte logique 16.

Le deuxième bloc comporte un moyen de séparation 24 du signal Hsync ayant une entrée reliée à la sortie S du détecteur de seuil 2 et une première sortie 26 reliée à une première entrée 28 du moyen de multiplexage 7 tandis qu'une deuxième sortie 30 est reliée, d'une part, à une entrée 32 du premier compteur 8, et d'autre part, à une entrée CLR1 de remise à zéro du deuxième compteur 9. Ce demier reçoit des impulsions périodiques fournies par une horloge, non représentée, et délivre au moyen de multiplexage 7 au moins deux valeurs numériques représentant respectivement un premier instant WIN1 antérieur à un deuxième instant WIN2 d'ouverture de la fenêtre de récupération des données auxiliaires.

Le moyen de multiplexage 7 comporte un décodeur 40 propre à décoder l'instant WIN1 et un décodeur 42 propre à décoder l'instant WIN2.

En fonctionnement, le détecteur de seuil 2 reçoit le signal CVBS (Composite Vidéo Baseband Signal) et délivre le signal de synchronisation composite Csync comportant les signaux de synchronisation verticale Vsync et horizontale Hsync. Lesdits signaux Vsync et Hsync sont ensuite extraits du signal Csync respectivement dans le premier bloc 12 et dans le deuxième bloc 14. Comme cela a été dit précédemment, l'extraction du signal Vsync est effectuée, de manière connue en soi, par l'intégrateur numérique 20. Le signal Vsync est ensuite utilisé pour synchroniser la remise à zéro du premier compteur 8 de ligne à chaque fin de trame de l'image transmise.

Ainsi lorsque le premier compteur 8 détecte une ligne du VBI, le deuxième compteur 9 détermine, par comptage des impulsions d'horloge, l'instant à partir duquel une fenêtre temporelle doit être ouverte. Ledit instant est transmis au moyen de multiplexage 7 qui reçoit simultanément un signal de commande To délivré par le moyen de séparation 24 du signal Hsync. En cas d'une erreur due à l'absence d'impulsion h au bout d'une durée égale à 68 µs, le moyen de séparation 24 envoi au moyen de multiplexage 7 un signal de commande To permettant d'avancer l'instant d'ouverture de la fenêtre temporelle en activant un décodeur 40. Ce dernier décode le premier instant WIN1 permettant ainsi de tenir compte du retard résultant de l'absence d'impulsion h et de son remplacement, 4µs plus tard, par une impulsion ha. La valeur numérique sélectionnée par le moyen de multiplexage 7 est ensuite envoyée à la deuxième entrée e2 de la porte logique 16. La sortie de la porte logique 16 fournit une fenêtre temporelle de récupération des données auxiliaires qui se trouvent sur la ligne du VBI dont le numéro est fourni par le décodeur de ligne 22 à la première entrée e1 de la porte logique 16.

La figure 6, illustre par quelques exemples d'utilisations du dispositif selon l'invention pour générer des fenêtres temporelles de récupérations de données auxiliaires TXT-SW, VPS-SW et WSS-SW respectivement du type TELETEXT, VPS et WSS.

## Revendications

1. Procédé de correction d'erreur de synchronisation d'opérations de récupération de séquences de données auxiliaires transmises sur des lignes invisibles du VBI d'un signal vidéo comportant un signal de synchronisation verticale (Vsync) et un signal de synchronisation horizontale (Hsync) qui comporte une pluralité d'impulsions de synchronisation (h, h1, h2, h3), utilisés pour synchroniser l'ouverture de fenêtres temporelles de récupération desdites données après un instant déterminé (WIN2), dans lequel, en cas d'absence d'une impulsion de synchronisation (h2) horizontale au bout d'une durée égale à H+ΔH, où H est la période du signal Hsync et ΔH est un premier laps de temps prédéterminé inférieur à H, on génère une impulsion de synchronisation artificielle (ha) pour synchroniser l'ouverture de fenêtre temporelle de récupération des données auxiliaires, **caractérisé en ce qu'**on génère l'impulsion de synchronisation artificielle (ha) après un instant raccourci (WIN1), l'instant raccourci (WIN1) étant inférieur à l'instant déterminé (WIN2) de manière à faire coïncider ledit instant avec le début de la séquence de données auxiliaires à récupérer.

2. Procédé selon la revendication 1, **caractérisé en ce que** dès la détection d'une impulsion de synchronisation horizontale (h), on génère un signal de masquage (SM) de tout signal susceptible d'être détecté pendant une durée M égale H-ΔH1, ΔH1 étant un deuxième laps de temps prédéterminé.

3. Procédé selon la revendication 2, **caractérisé en ce qu'**en cas de génération d'une impulsion de synchronisation artificielle (ha), on réduit la durée (SM2) du signal de masquage de manière à éviter de masquer l'impulsion de synchronisation horizontale (h3) correcte suivant l'impulsion de synchronisation horizontale (h2) manquante.

4. Procédé selon la revendication 2, **caractérisé en ce que** le deuxième laps de temps ΔH1 est égal à ΔH/2.

5. Procédé selon l'une des revendications 2 à 5, **caractérisé en ce qu'**en cas de détection d'au moins une impulsion de synchronisation pendant la durée M, et en cas de non détection d'impulsions de synchronisation pendant la durée H+ΔH, on génère une impulsion (BTL) d'indication d'une ligne erronée.

6. Procédé selon la revendication 5, **caractérisé en ce que** l'on choisit le premier laps de temps ΔH égal à 4 ms.

7. Dispositif de récupération de données auxiliaires comportant un détecteur de seuil (2) recevant un signal vidéo composite (CVBS) et délivrant un signal composite de synchronisation (Csync) à une unité numérique de calcul (4) destinée à extraire les signaux de synchronisation verticale (Vsync) et horizontale (Hsync) dudit signal composite (Csync), l'unité de calcul générant des impulsion de synchronisation (h, h1, h2, h3) et des impulsions de synchronisation artificielles (ha) en cas d'absence d'impulsion de synchronisation (h2) pendant une durée égale à H+ΔH, où H est la période du signal de synchronisation horizontale (Hsync), et où ΔH est un laps de temps déterminé inférieur à H, **caractérisé en ce que** ladite unité numérique de calcul (4) comporte, en outre, un moyen de multiplexage (7) destiné à sélectionner, parmi au moins des premier et deuxième instants différents (WIN1, WIN2), un instant d'ouverture d'une fenêtre temporelle de récupération des données auxiliaires contenues dans une ligne explorée, le choix de l'instant se faisant en fonction de l'absence ou de la non-absence d'une impulsion de synchronisation (h).

8. Dispositif selon la revendication 7, **caractérisé en ce que** l'unité numérique de calcul (4) comporte deux blocs fonctionnant parallèlement, soit un premier bloc (12) dédié à l'extraction du signal de synchronisation verticale (Vsync) et un deuxième bloc (14) dédié à l'extraction du signal de synchronisation horizontale (Hsync), lesdits premier et deuxième blocs sont reliés à une sortie (S) du détecteur de seuil (2), tandis que les sorties respectives desdits premier et deuxième blocs sont reliées respectivement à une première entrée (e1) et à une deuxième entrée (e2) d'une porte logique ET (16).

9. Dispositif selon la revendication 8, **caractérisé en ce que** le premier bloc (12) comporte un intégrateur numérique (20) ayant une entrée reliée à la sortie (S) du détecteur de seuil (2) et une sortie reliée à une entrée (CLR) de remise à zéro d'un premier compteur (8) dont la sortie est reliée, via un décodeur de lignes (22), à la première entrée (e1) de la porte logique ET (16).

10. Dispositif selon la revendication 9, **caractérisé en ce que** le deuxième bloc (14) comporte un moyen de séparation (24) du signal de synchronisation horizontale (Hsync) dont l'entrée est reliée à la sortie S du détecteur de seuil (2) et dont une première sortie (26) est reliée à une première entrée (28) du moyen de multiplexage (7) tandis qu'une deuxième sortie (30) est reliée, d'une part, à une entrée (32) du premier compteur (8), et d'autre part, à une entrée de remise à zéro (CLR) d'un deuxième compteur (9).

11. Dispositif selon la revendication 10, **caractérisé en ce que** le deuxième compteur (9) reçoit des impulsions périodiques fournies par une horloge et délivre au moyen de multiplexage (7) au moins deux valeurs numériques représentant respectivement le premier instant (WIN1) et le deuxième instant (WIN2) d'ouverture de la fenêtre de récupération des données auxiliaires.

12. Dispositif selon la revendication 11, **caractérisé en ce que** le moyen de multiplexage (7) comporte un premier décodeur (40) destiné à décoder le premier instant (WIN1) et un deuxième décodeur (42) destiné à décoder le deuxième instant (WIN2) corrélativement à un signal de commande reçu du moyen de séparation (24), la sortie dudit moyen de multiplexage (7) est reliée à une deuxième entrée (e2) de la porte logique ET (16).

## Patentansprüche

1. Verfahren zur Korrektur von Synchronisierfehlern von Vorgängen zur Rückgewinnung von zusätzlichen Datenfolgen, die in unsichtbaren Zeilen der Vertikalaustastlücke eines Videosignals übertragen werden, mit einem Vertikalsynchronsignal (Vsync) und einem Horizontalsynchronsignal (Hsync) mit mehreren Synchronimpulsen (h, h1, h2, h3), die zur Synchronisierung der Öffnung von Zeitfenstern für die Rückgewinnung der Daten nach einer bestimmten Zeit (WIN2) dienen, wobei im Falle des Fehlens eines Horizontalsynchronimpulses (h2) am Ende einer Periode gleich H+ΔH, wobei H die Periode des Signals Hsync und ΔH ein erster vorbestimmter Zeitabschnitt kleiner als H ist, ein künstlicher Synchronimpuls (ha) zur Synchronisierung der Öffnung des Zeitfensters für die Rückgewinnung der zusätzlichen Daten erzeugt wird,
**dadurch gekennzeichnet, daß**
der künstliche Synchronimpuls (ha) nach einer verkürzten Zeit (WIN1) erzeugt wird, wobei die verkürzte Zeit (WIN1) kleiner ist als die bestimmte Zeit (WIN2), derart, daß die Zeit mit dem Beginn der Folge der zurückzugewinnenden zusätzlichen Daten zusammenfällt.

2. Verfahren nach Anspruch 1, **dadurch gekennzeichnet, daß** bei der Detektion eines Horizontalsynchronimpulses (h) ein Verdeckungssignal (SM) für das ganze Signal erzeugt wird, das während einer Periode M gleich H-ΔH detektiert werden kann, wobei ΔH1 ein zweiter vorbestimmter Zeitabschnitt ist.

3. Verfahren nach Anspruch 2, **dadurch gekennzeichnet, daß** im Fall der Erzeugung eines künstlichen Synchronimpulses (ha) die Dauer (SM2) des Verdekkungssignals derart verringert wird, daß vermieden wird, daß ein richtiger Horizontalsynchronsimpuls (h3) gemäß einem fehlenden Horizontalsynchronimpuls (h2) verdeckt wird.

4. Verfahren nach Anspruch 2, **dadurch gekennzeichnet, daß** der zweite Zeitabschnitt ΔH1 gleich ΔH/2 ist.

5. Verfahren nach einem der Ansprüche 2 bis 5, **dadurch gekennzeichnet, daß** im Fall der Detektion wenigstens eines Synchronimpulses während der Dauer M und im Fall der Nicht-Detektion von Synchronimpulsen während der Dauer H+ΔH ein Impuls (BTL) zur Anzeige einer fehlerhaften Zeile erzeugt wird.

6. Verfahren nach Anspruch 5, **dadurch gekennzeichnet, daß** der erste Zeitabschnitt ΔH gleich 4 ms gewählt wird.

7. Vorrichtung zur Rückgewinnung von zusätzlichen Daten mit einem Schwellwertdetektor (2), der ein zusammengesetztes Videosignal (CVBS) empfängt und ein zusammengesetztes Synchronsignal (Csync) zu einer digitalen Berechnungseinheit (4) liefert, die dafür vorgesehen ist, Vertikalsynchronsignale (Vsync) und Horizontalsynchronsignale (Hsync) des zusammengesetzten Signals (Vsync) zu extrahieren, wobei die Berechnungseinheit Synchronimpulse (h, h1, h2, h3) und künstliche Synchronimpulse (ha) im Falle des Fehlens von Synchronimpulsen (h) während einer Periode gleich H+ΔH erzeugt, wobei H die Periode des Horizontalsynchronsignals (Hsync) und ΔH ein vorbestimmter Zeitabschnitt kleiner als H ist, **dadurch gekennzeichnet, daß** die digitale Berechnungseinheit (4) außerdem Multiplexiermittel (7) zur Auswahl, unter wenigstens einer ersten und einer zweiten unterschiedlichen Zeit (WIN1, WIN2), einer Zeit zur Öffnung eines Zeitfensters zur Rückgewinnung der zusätzlichen Daten enthält, die in einer ausgewerteten Zeile enthalten sind, wobei die Wahl der Zeit in Abhängigkeit von der Abwesenheit oder der Nicht-Abwesenheit eines Synchronimpulses (h) erfolgt.

8. Vorrichtung nach Anspruch 7, **dadurch gekennzeichnet, daß** die digitale Berechnungseinheit (4) zwei parallel arbeitende Blöcke enthält, nämlich einen ersten Block (12) zur Extrahierung des Vertikalsynchronsignals (Vsync) und einen zweiten Block (14) zur Extrahierung des Horizontalsynchronsignals (Hsync), und daß der erste und der zweite Block mit einem Ausgang (S) des Schwellwertdetektors (2) verbunden sind, während die jeweiligen Ausgänge des ersten und des zweiten Blocks mit einem ersten Eingang (e1) bzw. einem zweiten Eingang (e2) eines logischen UND-Gatters (16) verbunden sind.

9. Vorrichtung nach Anspruch 8, **dadurch gekennzeichnet, daß** der erste Block (12) einen digitalen Integrator (20) mit einem Eingang, der mit dem Ausgang (S) des Schwellwertdetektors (2) verbunden ist, und einen Ausgang enthält, der mit einem Eingang (CLR) zum Rücksetzen auf null des ersten Zählers (8) verbunden ist, dessen Ausgang über einen Zeilendekoder (22) mit dem ersten Eingang (e1) des logischen UND-Gatters (16) verbunden ist.

10. Vorrichtung nach Anspruch 9, **dadurch gekennzeichnet, daß** der zweite Block (14) Mittel (24) zur Trennung des Horizontalsynchronsignals (Hsync) enthält, deren Eingang mit dem Ausgang (S) des Schwellwertdetektors (2) und deren erster Ausgang (26) mit einem ersten Eingang (28) der Multiplexiermittel (7) verbunden ist, während ein zweiter Ausgang (30) einerseits mit einem Eingang (32) des ersten Zählers (8) und andererseits mit einem Eingang zum Rücksetzen auf null (CLR) eines zweiten Zählers (9) verbunden ist.

11. Vorrichtung nach Anspruch 10, **dadurch gekennzeichnet, daß** der zweite Zähler (9) periodische Impulse empfängt, die durch einen Takt geliefert werden, und zu dem Multiplexiermitteln (7) wenigstens zwei digitale Werte liefert, die die erste Zeit (WIN1) bzw. die zweite Zeit (WIN2) der Öffnung des Fensters zur Rückgewinnung der zusätzlichen Daten darstellt.

12. Vorrichtung nach Anspruch 11, **dadurch gekennzeichnet, daß** die Multiplexiermittel (7) einen ersten Dekoder (40) enthalten, der dafür vorgesehen ist, die erste Zeit (WIN1) zu dekodieren, und einen zweiten Dekoder (42) enthalten, der dafür bestimmt ist, die zweite Zeit (WIN2) in Zusammenarbeit mit einem von den Trennmitteln (24) empfangenen Steuersignal zu dekodieren, wobei der Ausgang der Multiplexiermittel (7) mit einem zweiten Eingang (e2) des logischen UND-Gatters (16) verbunden ist.

## Claims

1. Process for correcting errors in synchronisation in operations of recovering sequences of ancillary data transmitted in invisible lines of the VBI of a video signal having a vertical synchronisation signal (Vsync) and a horizontal synchronisation signal (Hsync) which includes a plurality of synchronisation pulses (h, h1, h2, h3), used for synchronising the opening of time windows for recovering said data after a determined moment (WIN2), wherein, in the event of absence of a horizontal synchronisation pulse (h2) at the end of a period equal to H+ΔH, where H is the period of the signal Hsync and ΔH is a first predetermined lapse of time shorter than H, an artificial synchronisation pulse (ha) is generated for synchronising the time window opening for recovering the ancillary data, **characterised in that** the artificial synchronisation pulse (ha) is generated after a shortened moment (WIN1), the shortened moment (WIN1) being shorter than the determined moment (WIN2) so as to cause said moment to coincide with the start of the sequence of ancillary data to be recovered.

2. Process according to claim 1, **characterised in that** as soon as a horizontal synchronisation pulse (h) is detected, a signal (SM) for masking any signal liable to be detected during a period M equal to H-ΔH1 is generated, ΔH1 being a second predetermined lapse of time.

3. Process according to claim 2, **characterised in that** in the event of the generation of an artificial synchronisation pulse (ha), the duration (SM2) of the masking signal is reduced so as to avoid masking the correct horizontal synchronisation pulse (h3) following the missing horizontal synchronisation pulse (h2).

4. Process according to claim 2, **characterised in that** the second lapse of time ΔH1 is equal to ΔH/2.

5. Process according to any of claims 2 to 5, **characterised in that** in the event of detection of at least one synchronisation pulse during the period M, and in the event of the non-detection of synchronisation pulses during the period H+ΔH, a pulse (BTL) indicating an erroneous line is generated.

6. Process according to claim 5, **characterised in that** the first lapse of time ΔH is chosen equal to 4 ms.

7. Device for recovering ancillary data comprising a threshold detector (2) receiving a composite video signal (CVBS) and delivering a composite synchronisation signal (Csync) to a digital calculation unit (4) designed to extract the vertical (Vsync) and horizontal (Hsync) synchronisation signals from said composite signal (Csync), the calculation unit generating synchronisation pulses (h, h1, h2, h3) and artificial synchronisation pulses (ha) in the event of absence of synchronisation pulse (h2) during a period equal to H+ΔH, where H is the period of the horizontal synchronisation signal (Hsync), and where ΔH is a determined lapse of time shorter than H, **characterised in that** said digital calculation unit (4) also includes a multiplexing means (7) designed to select, from at least two different first and second moments (WIN1, WIN2), a moment of opening of a time window for recovering the ancillary data contained in a line being explored, the choice of the moment being carried out as a function of the absence or the non-absence of a synchronisation pulse (h).

8. Device according to claim 7, **characterised in that** the digital calculation unit (4) comprises two units functioning in parallel, namely a first unit (12) dedicated to the extraction of the vertical synchronisation signal (Vsync) and a second unit (14) dedicated to the extraction of the horizontal synchronisation signal (Hsync), said first and second units being connected to an output (S) of the threshold detector (2), whereas the respective outputs of the first and second units are connected respectively to a first input (e1) and to a second input (e2) of a logic AND gate (16).

9. Device according to claim 8, **characterised in that** the first unit (12) comprises a digital integrator (20) having an input connected to the output (S) of the threshold detector (2) and an output connected to a zeroing input (CLR) of a first counter (8) whose output is connected, via a line decoder (22), to the first input (e1) of the logic AND gate (16).

10. Device according to claim 9, **characterised in that** the second unit (14) comprises a means (24) for separating the horizontal synchronisation signal (Hsync) having an input connected to the output S of the threshold detector (2), having a first output (26) connected to a first input (28) of the multiplexing means (7), and having a second output (30) connected, on the one hand, to an input (32) of the first counter (8), and on the other hand, to a zeroing input (CLR) of a second counter (9).

11. Device according to claim 10, **characterised in that** the second counter (9) receives periodic pulses supplied by a clock and delivers to the multiplexing means (7) at least two digital values representing respectively the first moment (WIN1) and the second moment (WIN2) of opening of the window for recovering ancillary data.

12. Device according to claim 11, **characterised in that** the multiplexing means (7) comprises a first decoder (40) designed to decode the first moment (WIN1) and a second decoder (42) designed to decode the second moment (WIN2) correlatively with a control signal received from the separation means (24), the output of the multiplexing means (7) being connected to a second input (e2) of the logic AND gate (16).
